(19) **Europäisches Patentamt / European Patent Office / Office européen des brevets**

(11) **EP 2 311 260 B1**

(12) **EUROPEAN PATENT SPECIFICATION**

(45) Date of publication and mention
of the grant of the patent:
**24.12.2014 Bulletin 2014/52**

(51) Int Cl.:
*H04N 21/234* (2011.01)     *H04N 21/236* (2011.01)
*H04N 21/2381* (2011.01)     *H04N 21/44* (2011.01)

(21) Application number: **08794446.8**

(22) Date of filing: **09.07.2008**

(86) International application number:
**PCT/US2008/008488**

(87) International publication number:
**WO 2010/005416 (14.01.2010 Gazette 2010/02)**

(54) **CONSTANT BIT RATE PADDING OF MPEG TRANSPORT STREAMS**

Erzeugung von MPEG-Transportstömen mit konstanter Bitrate

REMPLISSAGE À DÉBIT CONSTANT DE FLUX DE TRANSPORT MPEG

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**20.04.2011 Bulletin 2011/16**

(73) Proprietor: **Ericsson Television Inc.
Duluth, GA 30096 (US)**

(72) Inventor: **NORONHA, JR., Ciro, A.
Palo Alto, CA 94306 (US)**

(74) Representative: **Hoffmann Eitle
Patent- und Rechtsanwälte PartmbB
Arabellastraße 30
81925 München (DE)**

(56) References cited:
**EP-A- 1 562 381     EP-A- 1 821 542
EP-A- 1 883 247     WO-A-02/25952**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention generally relates to data communications. More particularly, the present invention relates to a system and method for converting a variable bit rate transport stream into a fixed bit rate transport stream with compliant program clock references.

BACKGROUND OF THE INVENTION

In EP 1 821 542 A2, there is described a transmission rate adjustment device and method. The device includes a buffer, a buffer write unit for both sequentially writing to the buffer transport packets of a transport stream that have been read from an MPEG2-TS file and detecting time stamps in the transport stream, and a buffer read unit for transmitting to a MPEG decoder transport packets that have been sequentially read from the buffer at a transmission rate determined by a clock obtained by frequency-dividing a system clock of the MPEG decoder by a frequency division rate designated by a frequency division rate signal. The buffer read unit not only inserts NULL packets between transport packets, but also re-writes time stamps when adjustment cannot be realized by merely inserting the NULL packets.

In WO 02/25952 A2, there is described a regeneration of program clock reference data for MPEG transport streams. In more detail, there is described a system for providing an accurate time reference for multiple input and output digital video signals of a transcoder that is particularly suited for use with MPEG data. The multiple streams are synchronized with a single master system time clock at the transcoder. Timing data from the master clock is compared to timing data from packets that are input to the transcoder to determine an offset. In particular, timing data, such as a program clock reference field, is recovered from packets of different channels that are input to the transcoder. For each channel, timing data is then provided for packets that are output from the transcoder based on the offset and timing data of the master clock at the respective output times. In particular, the adjusted timing data is determined as a sum of the offset and an associated hardware error, less a delay associated with the transcoder, which includes a lookahead delay and a buffer delay. The associated hardware error represents an error of the master clock and/or a system time clock of an encoder that encoded the particular channel.

Further, in digital video broadcasting (DVB), transport streams are used to deliver program data between a transmitter device and a receiver device. The transmission is typically communicated over networks. Program data has video and audio components, as well as ancillary information such as subtitles, teletext, and others.

The transmitter device receives as input the video, audio, and ancillary data components of one or more programs. The transmitter device compresses the data, divides the data into packets, and generates a single transport stream. A periodic Program Clock Reference (PCR) may be included in the generated transport stream. The PCR is used by the receiver device to present the audio and the video signals at the intended program rate. The transport stream is transmitted by the transmitter device to a network.

The receiver device obtains the transport stream from the network. The receiver device decodes the transport stream. The video, audio, and PCR components are parsed to reconstruct the transmitted program(s).

SUMMARY OF THE INVENTION

In one embodiment of the invention, a device for converting a variable bit rate transport stream to a constant bit rate transport stream has the features of claim 1. The transport stream is generated by a transmitter device and is to be received by a receiver device. The system comprises the transmitter device, the receiver device, and a further device that has at least: (1) an input buffer to store a plurality of packets and at least two Program Clock References of an input transport stream; (2) a comparator coupled to the input buffer to determine if a complete Program Clock Reference (PCR) interval has been stored; (3) an arithmetic unit coupled to the comparator to compute a number of null packets to insert into an output transport stream if a complete PCR interval has been stored; and (4) a PCR restamper coupled to the arithmetic unit to restamp PCRs. The device may be implemented in the transmitter device, in the receiver device, or intermediary to the transmitter device and the receiver device.

For another embodiment of the invention, a method for converting a variable bit rate transport stream to a constant bit rate transport stream has the features of claim 11. The method comprises: (1) receiving a variable bit rate transport stream with one or more programs, wherein the transport stream comprises at least one PCR flow; (2) storing a plurality of packets of the transport stream to a buffer; (3) computing a number of null packets to be inserted to the transport stream; and (4) distributing the null packets to the transport stream.

The foregoing is a summary and thus contains, by necessity, simplifications, generalizations and omissions of detail; consequently, those skilled in the art will appreciate that the summary is illustrative only and is not intended to be in any way limiting. Other aspects, inventive features, and advantages of the present disclosure, as defined solely by the claims, will become apparent in the non-limiting detailed description set forth below.

BRIEF DESCRIPTION OF THE DRAWINGS

FIG. 1A is a block diagram of an embodiment for implementing a system having a VBR to CBR transport stream converter.
FIG. 1B is a block diagram of another embodiment for implementing a system having a VBR to CBR transport stream converter.
FIG. 1C is a block diagram of yet another embodiment for implementing a system having a VBR to CBR transport stream converter.
FIG. 2 is a block diagram of an embodiment of a transport stream converter.
FIG. 3 is a flowchart of an embodiment for converting a VBR transport stream having a single PCR PID to a CBR transport stream.
FIG. 4 is a flowchart of an embodiment for converting a VBR transport stream having multiple PCR PIDs to a CBR transport stream.
FIG. 5 is a flowchart of one embodiment for calculating an error correction variable, $\alpha$, to re-stamp the PCRs.
FIG. 6 is a flowchart for an embodiment for preventing PCR spacing compliance issues.
FIG. 7 is a block diagram of an embodiment of an output generator.
FIG. 8 is a block diagram of another embodiment of an output generator.

DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components, and circuits have not been described in detail so as not to obscure the present invention.

Transport bit rate is defined by the number of bits in the stream between two consecutive PCRs divided by the difference (expressed in time) between these two PCRs. The communication of compressed program data may include a variable bit rate (VBR) transport stream. The VBR transport stream can be seen as a piece-wise constant bit rate stream between every pair of successive PCRs. The program may be compressed in a number of formats, including MPEG-1, MPEG-2, MPEG-4, H.264, VC-1, and others. Some receiver devices are capable of accepting VBR transport streams, and processing or displaying them. Other devices, however, have strict timing requirements, and require transport streams at a fixed, or constant bit rate (CBR), for processing.

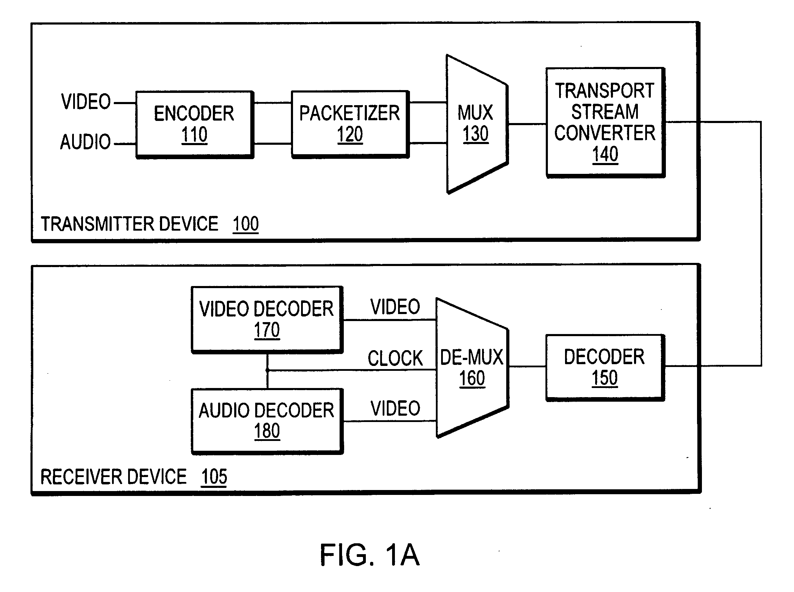

Figure 1A depicts a block diagram of one embodiment of a system having a VBR to CBR transport stream converter. The system comprises a transmitter device 100 and a receiver device 105. Transmitter device 100 may be coupled to receiver device 105 via a network.

The transmitter device 100 may further comprise an encoder 110, a packetizer 120, a multiplexer (mux) 130, and a transport stream converter 140. Encoder 110 is coupled to packetizer 120. Packetizer 120 is coupled to multiplexer 130. Multiplexer 130 is coupled to transport stream converter 140.

The encoder 110 receives video and audio components of a program as inputs. The encoder 110 may compress and convert the inputs to digital form. A first generated elementary stream may comprise video data. A second generated elementary stream may comprise audio data. The elementary streams are inputs to packetizer 120.

The packetizer 120 produces packetized elementary streams. Each packetized elementary stream (PES) may comprise a header and a payload. The header may contain information necessary to decode the payload bits. The payload may comprise elementary encoded components such as audio and video signals.

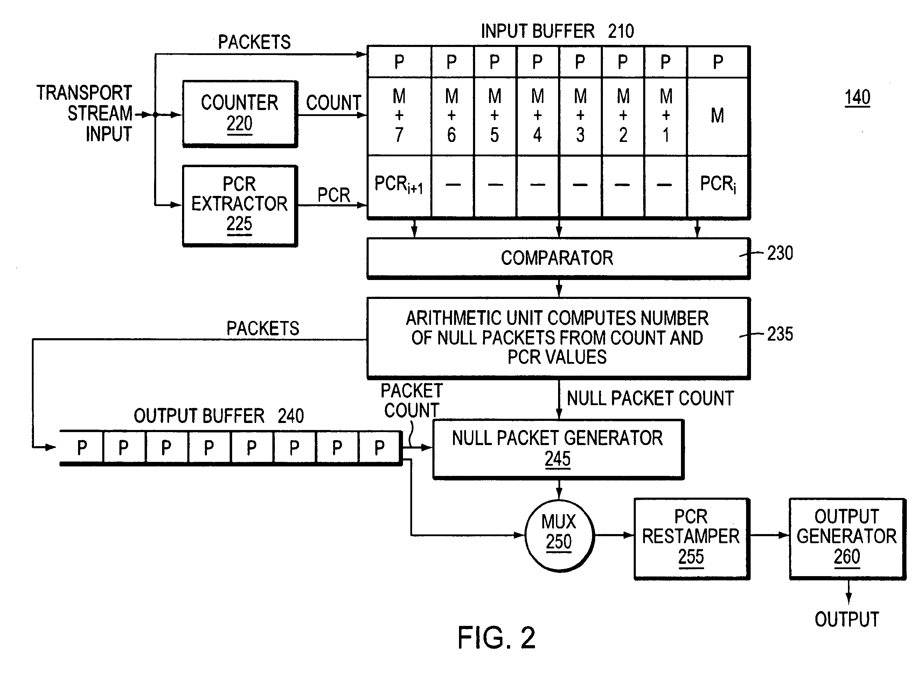

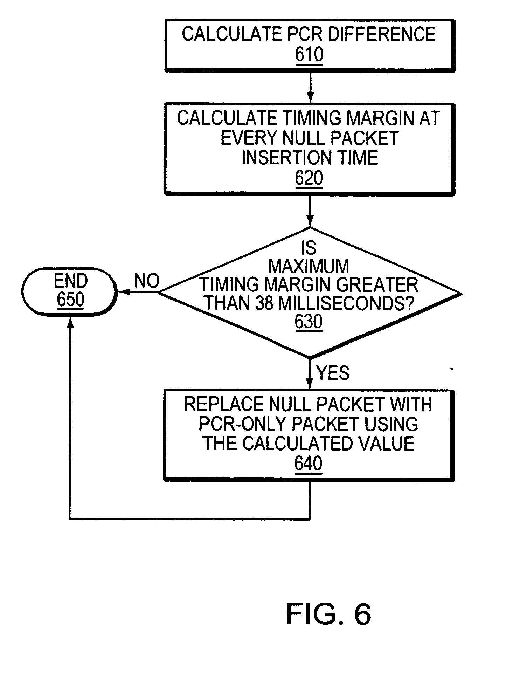

The multiplexer 130 combines the packetized elementary streams of video and audio data to form a single transport stream. The multiplexer 130 is also responsible for further packetizing the packetized elementary streams into transport packets and inserting PCRs. One embodiment of an algorithm for inserting PCRs into transport packets is described in Figure 6 below. For this embodiment of the invention, the transport stream is input to a transport stream converter 140 of the transmitter device 100. The transport stream converter 140 converts a VBR transport stream to a CBR transport stream. The implementation of the transport stream converter 140 is described in greater detail in Figure 2 below.

The receiver device 105 comprises decoder 150, de-multiplexer (de-mux) 160, video decoder 170 and audio decoder 180. Decoder 150 is coupled to de-multiplexer 160. De-multiplexer 160 is coupled to video decoder 170 and audio decoder 180.

The decoder 150 may decode a transport stream based on a specific channel of the network. The de-multiplexer 160 separates the audio, the video, and the clock components of the transport stream. The clock may be used to synchronize the decoding of elementary streams to a common master PCR time base. Video decoder 170 decodes the video elementary stream. Audio decoder 180 decodes the audio elementary stream.

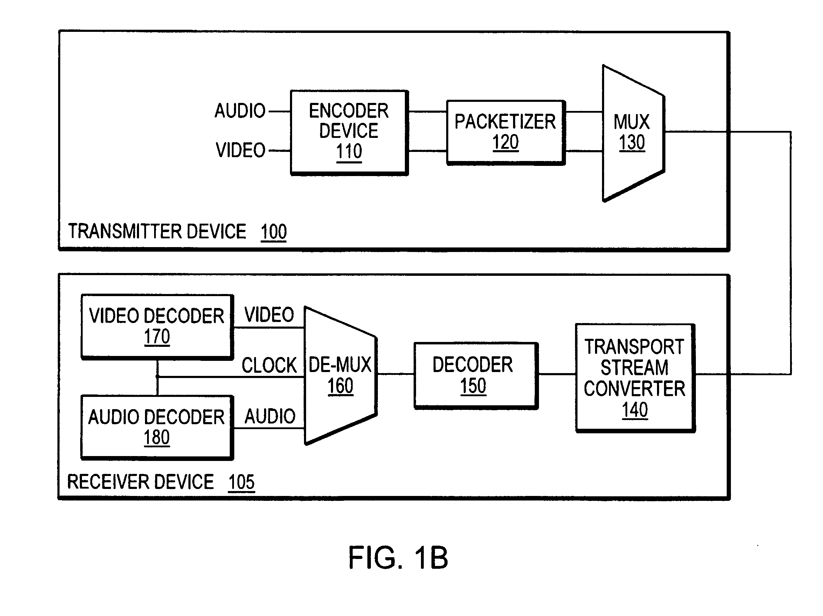

Figure 1B depicts a block diagram of another embodiment for implementing a system having a VBR to CBR transport stream converter. Similar to Figure 1A, the implementation of Figure 1B comprises a transmitter device 100 and a receiver device 105. For this embodiment of the invention, however, the transport stream converter 140 is part of the receiver device 105. The functionality of transmitter device 100 components, encoder 110, packetizer 120, and multiplexer 130, are the same as previously described. In the receiver device 105, the transport stream converter 140 is coupled to decoder 150. The functionality of receiver device 105 components, transport stream converter 140, decoder 150, de-multiplexer 160, video decoder 170, and audio decoder 180, are the same as previously described.

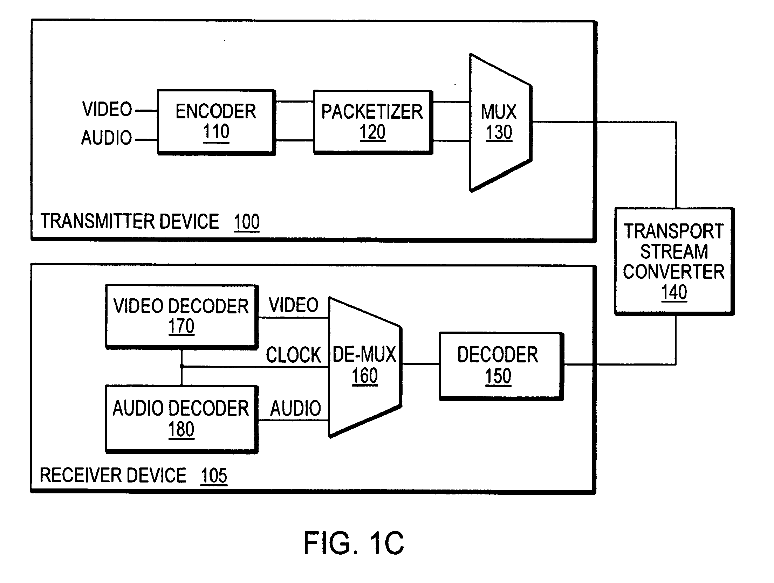

Figure 1C depicts a block diagram of yet another embodiment for implementing a system having a VBR to CBR transport stream converter. Similar to Figure 1A, the implementation of Figure 1C comprises a transmitter device 100 and a receiver device 105. For this embodiment of the invention, however, the transport stream converter 140 is external to both the receiver device 105 and the transmitter device 100. The functionality of transmitter device 100 components, encoder 110, packetizer 120, and multiplexer 130, are the same as previously described. The functionality of receiver device 105 components, decoder 150, de-multiplexer 160, video decoder 170, and audio decoder 180, are the same as previously described.

Figure 2 depicts a block diagram of a transport stream converter 140. Transport stream converter 140 comprises input buffer 210, counter 220, PCR extractor 225, comparator 230, arithmetic unit 235, output buffer 240, null packet generator 245, multiplexer 250, PCR restamper 255, and output generator 260. Input buffer 210 is coupled to counter 220, PCR extractor 225, and comparator 230. Comparator 230 is coupled to arithmetic unit 235. Arithmetic unit 235 is coupled to output buffer 240 and null packet generator 245. Null packet generator 245 is coupled to multiplexer 250. Multiplexer 250 is coupled to PCR restamper 255. PCR restamper 255 is coupled to output generator 260.

For this embodiment of the invention, a transport stream is received as input to the transport stream converter 140. Packets are received and stored to input buffer 210. A counter 220 may increment each time a packet is stored to input buffer 210. The counter value may be stored to the buffer 210 with its corresponding packet. The PCR extractor 225 may extract PCR values from the transport stream. The PCR values may be stored in the buffer 210 with its corresponding packet.

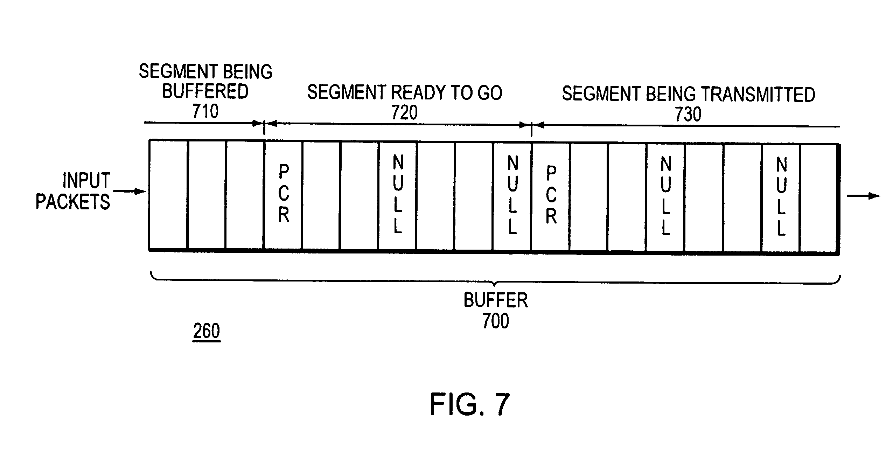

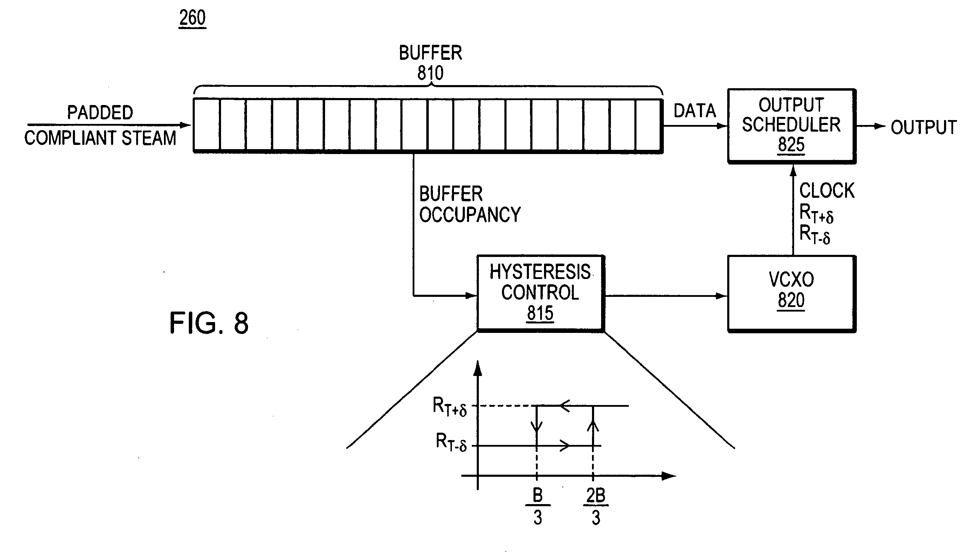

Comparator 230 identifies when the buffer 210 has stored a complete PCR interval. Once the comparator 230 determines that the buffer 210 has a complete PCR interval, the comparator 230 passes packets of the PCR interval to the arithmetic unit 235. The arithmetic unit 235 computes the number of null packets to be added to the transport stream. The null packets may pad the transport stream to a constant bit rate. Once the number of null packets is calculated, the packets are sent to output buffer 240. As the packets are output from the output buffer, null packets are inserted by null packet generator 245 and multiplexer 250 to the bitstream based on the packet count. PCR restamper 255 restamps PCR values to ensure that all timing requirements are met. The output generator 260 controls the output rate of the transport stream to the network. Embodiments of output generator 260 are described below in Figures 7 and 8.

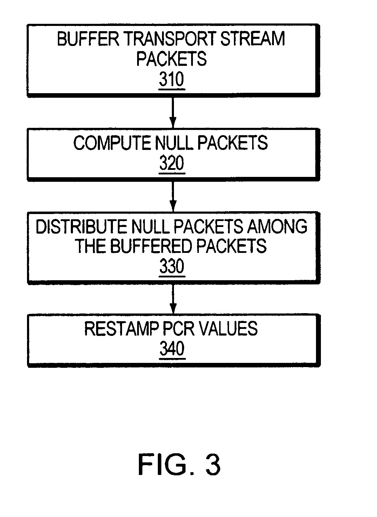

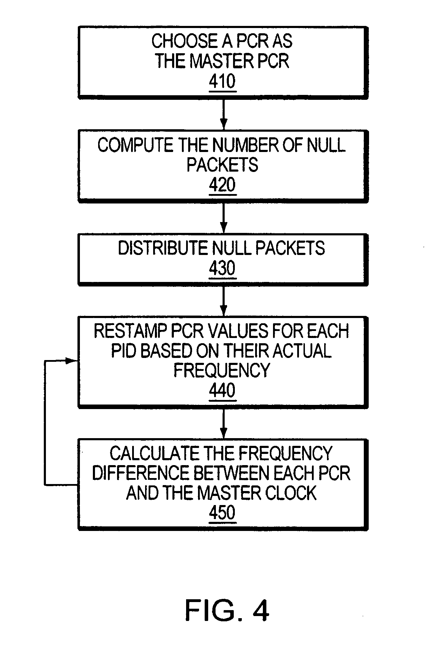

Figures 3 and 4 show algorithms for computing the number of null packets to be inserted, distributing the null packets among buffered transport stream packets, and restamping PCRs. More particularly, Figure 3 depicts a flowchart of an embodiment for converting an input VBR transport stream having a single PCR packet identifier (PID) to a CBR transport stream. Each program to be transmitted may have a unique PID.

In operation 310, packets are received. Some packets may have a corresponding PCR. Upon reception of at least a first and a second PCR value, operation 320 computes the number of null packets to be inserted. The following equation calculates the number of bits required to pad the input rate to reach the target rate:

$$Diff = R_T(PI_{i+1} - PO_i) - BI$$

$$\text{(equation 1).}$$

$R_T$ is the target bit rate of the transport stream converter 140. The target bit rate may be approximately equal to the bandwidth of the network. $PI_{i+1}$ is the $(i+1)^{th}$ input PCR value to the transport stream converter 140. The values of the input PCR values may be extracted from the input transport stream. $PO_i$ is the $i^{th}$ output PCR value from the transport stream converter 140. The first PCR value, $PO_1$, may be set to be equal to the first input PCR, $PI_1$. $BI$ is the number of bits, or packets, in the input transport stream between the first PCR and the second PCR.

If *Diff* is greater than zero, then the following equation is used to calculate the number of null packets, NP:

$$NP = \left[ \frac{Diff}{1504} + 0.5 \right]$$

(equation 2).

The *Diff* in equation 2 is divided by 1504 because the MPEG format defines a 188 byte, or 1504 bit, packet. Thus, for another embodiment of the invention, the divider value may be different if the packet to be transferred has a format that defines a different number of bits. The brackets in the formula denote the largest integer not greater than the calculated value. Otherwise, if *Diff* is less than or equal to zero, the number of null packets is zero.

In operation 330, null packets are uniformly distributed among the packets stored in the output buffer. In other words, the null packets may be uniformly distributed between the first and second input PCR values. If there are *NP* null packets to be inserted among *T* transport packets, the number of null packets $n_k$ to be inserted immediately after packet *k,* where *k* is from 1 to *T*, is given by:

$$n_k = \left[ \frac{k * NP}{T} - \sum_{i=1}^{k-1} n_i \right]$$

(equation 3).

Adding null packets to the bitstream may alter the temporal position of subsequent output PCR values. Thus, in operation 340, output PCR values, $PO_{i+1}$, may be restamped in accordance with the equation:

$$PO_{i+1} = PO_i + \frac{BI + 1504 + NP}{R_T} * 27 * 10^6$$

(equation 4).

The multiplier in equation 4 is $27*10^6$ because it is assumed that the PCRs are sampled from 27 MHz clocks. This multiplier may be different if the PCRs are sampled from a different clock frequency.

Figure 4 depicts a flowchart for an embodiment for converting an input VBR transport stream having multiple PCR PIDs to a CBR transport stream. In operation 410, a PCR in the input transport stream is arbitrary chosen as the master PCR. After at least a first PCR and a second PCR are received, in operation 420, the number of null packets to be added is computed by the formulas presented in equations 1 and 2. In this computation, only the chosen master PCR is considered for providing the time stamps, but all the transport bits are counted. If the value for *Diff* as calculated in equation 1 is less than zero, the number of null packets to be added is zero. In operation 430, the calculated number of null packets are evenly distributed among the buffered packets as set forth in equation 3.

In operation 440, the output PCRs are restamped based on their actual frequency. For each PCR-bearing PID, *j*, the first output PCR, $PO_1^j$, may be set to be equal to the first input PCR, $PI_1^j$. There may be a total of *N* PCR-bearing PIDs. If there are $T_i^j$ transport stream packets between PCRs $PO_i^j$ and $PO_{i+1}^j$, the output PCR should be restamped as follows:

$$PO_{i+1}^{j} = PO_{i}^{j} + \frac{1504 * T_{i}^{j}}{R_{T}(1+\alpha_{j})} * 27 * 10^{6}$$

(equation 5).

The PCRs may be samples from 27 MHz clocks. Multiple PCRs in a transport stream, however, are not required to be from the same clock. Thus, the frequency difference between each PCR and the master PCR is calculated in operation 450. $(1+\alpha_{j})$:1 is the ratio between the 27 MHz clock for PCR-bearing PID $j$ and the 27 MHz clock for the master PCR. The value of $(1+\alpha_{j})$ of each PID may be estimated by comparing a sequence of input PCRs, $PI_{i}^{j}$, and output PCR errors, $PO_{i}^{j} - PI_{i}^{j}$.

The addition of null packets into the transport stream may inject jitter. If there is a frequency drift, the average output PCR error may increase linearly with time. For one embodiment of the invention, the average output PCR error may be estimated with a least-squares fitting of a linear equation to the data. For a given set of samples, $(X_1, Y_1)$, $(X_2, Y_2)$, $(X_3, Y_3)$, ... $(X_N, Y_N)$, the best fit for an equation of type $y = a_0 + a_1 x$ is given by:

$$a_0 = \frac{\sum Y \sum X^2 - \sum X \sum XY}{N \sum X^2 - (\sum X)^2}$$

(equation 6).

$$a_1 = \frac{N \sum XY - \sum X \sum Y}{N \sum X^2 - (\sum X)^2}$$

(equation 7).

Applying a set of data samples to equations 6 and 7, the value of correction factor, $\alpha$, is approximately equal to $a_1$. The output PCR error at the beginning of the measurement period is approximately equal to $a_0$. The output PCR error at the end of the measurement period, $PO_N - PI_N$, is approximately equal to $a_0 + a_1 PI_N$.

A good estimate of $\alpha$ may be obtained if data samples are collected over a period of time and applied to equations 6 and 7. For the first estimation period, $\alpha$ may be set to zero. For any value of $\alpha$, there may be a steady-state error of $a_0 + a_1 PI_N$ at the end of the estimation period. During the next period, the steady-state error and the frequency ratio may be used to compensate for the output PCR error. The calculated frequency estimation in operation 450 is used to restamp PCR values for each PID in operation 440. Long-term drift may be decreased by periodically correcting the estimation.

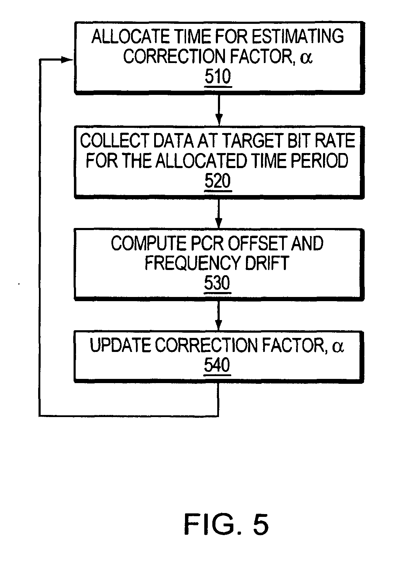

Figure 5 depicts a flowchart of one embodiment for estimating $\alpha$. In operation 510, for every PID, a time duration is allocated for estimating a value for $\alpha$. For one embodiment of the invention, the time duration for estimation may be set for five minutes. In the worst case, when the transport clock is 30 parts per million (ppm) below 27 MHz, and the fastest clock is 30 ppm above 27 MHz, the drift will be 1620 Hz. Over five minutes, this will cause a PCR drift of 486,000 ticks, or 18 milliseconds.

In operation 520, data is collected using the target bit rate of PID $j$, $R_{T}^{j}$, for the period of time defined in operation 510. The data collected is then applied to equations 6 and 7 in operation 530 to obtain the PCR offset and frequency drift. For one embodiment of the invention, a phase lock loop may compare an input PCR, $PI_{i}^{j}$, and an output PCR, $PO_i^j$, to generate an output PCR error, $PO_i^j - PI_i^j$, and correction factor, $\alpha_j$, for each PID having a PCR. In operation 540, the updated correction factor $\alpha_j$ is supplied to the PCR restamping module, and is used in accordance with equation 5 to cancel out the PCR error. The algorithm then returns to operation 510 to periodically correct for PCR drift.

The algorithm presented in Figure 5 presents a potential compliance problem anytime after a PCR is corrected. There is a possibility that a buffer model is violated. For example, the timing path between the encoder and the multiplexer in the transmitter device may lot leave any additional timing margins. It is not practical for a multiplexer to check the state of the buffers before making any correction. In addition, it is not possible for the multiplexer to check the state of the buffers if the bitstream is scrambled. Therefore, the analysis and retiming of PCR values may be performed in a transport stream converter as set forth below.

DVB compliance requires that PCR spacing be no more than 40 milliseconds. Equations 6 and 7 do not guarantee that this requirement will be met even if the input stream is compliant. For example, if two incoming PCRs are approximately 40 milliseconds apart, $PO_i$ may receive a negative correction and $PO_{i+1}$ may receive a positive correction. As a result, it is possible that the difference between $PO_i$ and $PO_{i+1}$ is greater than 40 milliseconds.

Figure 6 depicts a flowchart for an embodiment for preventing PCR spacing compliance issues. For this embodiment, PCR packets may be inserted instead of null packets in some cases. The inserted PCR packets may have the same PID as the PCR flow that is at risk of non-compliance. The PCR packets may have no payload. Thus, the adaptation field of the PCR packets may be 183 bytes in length. The continuity counter of the PCR packets may be set to the same value as the previous packet in the flow. The PCR flag of the PCR packets may be set and the PCR field may be stamped.

After the output stream has already been padded with null packets, the interval difference between PCR packets for PID $j$ is calculated in operation 610 in accordance with:

$$\frac{tp_i^j * 1504}{R_T(1+\alpha_j)} * 27 * 10^6 \qquad \text{(equation 9)}.$$

The variable $tp_i^j$ is the number of output transport packets after PCR packet $i$ on PCR PID $j$ at a given time. In operation 620, the maximum timing margin is calculated at every null packet insertion time in accordance with the following:

$$\max_j\left(\frac{tp_i^j * 1504}{Rt(1+\alpha_j)} * 27 * 10^6\right)$$

**(equation 10).**

In operation 630, it is determined if the maximum timing margin as calculated in operation 620 is greater than approximately 38 milliseconds, or 1,026,000 ticks. If the maximum PCR difference is greater than 38 milleseconds, in operation 640 the null packet is replaced by a PCR stamped with the value:

$$PO_i^j + \frac{tp_i^j * 1504}{Rt(1+\alpha_j)} * 27 * 10^6$$

**(equation 11).**

Following operation 640, or if the maximum timing margin is less than or equal to approximately 38 milliseconds in operation 630, the algorithm in Figure 6 is terminated in operation 650.

Blocks of transport packets corresponding to roughly one PCR interval for the master PCR PID may be available to transmit at once. As a result, absent a controller, the output of the device may be a burst of back-to-back packets at approximately every 40 milliseconds. To avoid unnecessary saturation of network bandwidth, output generator 260 may be used to control the transport stream output rate.

Figure 7 depicts one embodiment for implementing output generator 260. For this embodiment, output generator is a first in, first out (FIFO) structure comprising a buffer 700 that may store data. The buffer 700 may further comprise a first segment 710 to store packets being buffered, a second segment 720 to store packets that are ready to be transmitted, and a third segment 730 storing packets that are being transmitted.

Packets input to the buffer 700 are initially part of the first segment 710. The padding algorithms set forth above may be executed on the packets, which may then be stored in the first segment 710. Once a PCR interval is received, the processed output stream becomes part of the second segment 720. Each transport packet added to the FIFO causes one transport packet to be dequeued from the buffer, if one is ready. The packet being dequeued becomes part of the third segment 730. The packet being dequeued may include any associated null values and/or extra PCRs.

For another embodiment of the invention, an output generator 260 may be a buffer with hysteresis control as depicted in Figure 8. The structure of Figure 8 has two output rates. The first rate is slightly higher than nominal, and the second rate is slightly lower. If the buffer is headed for overflow, the rate that is slightly higher is used. On the other hand, if the buffer is headed for underflow, the slightly lower rate is used.

A hysteresis control may provide a transport stream that is completely CBR in time such that there is a constant inter-packet gap in time. In contrast, the output of the FIFO structure is dependent on the input of packets to the output generator 260.

The structure of Figure 8 comprises buffer 810, hysteresis control 815, voltage controlled crystal oscillator (VCXO) 820, and output scheduler 825. Buffer 810 is coupled to output scheduler 825 and hysteresis control. Output scheduler 825 and hysteresis control 815 are further coupled to VCXO 820. The buffer 810 stores a transport stream that may be generated by padding algorithm(s) as set forth in Figures 3 and 4 above. The buffer 810 has a storage size $B$. The output scheduler 825 controls the output of the buffer.

Hysteresis control 815 tracks the remaining buffer capacity against the drain rate. If $R_T$ is the target output rate and $Dr$ is the worst-case drift between the master PCR clock and the CPU clock, the buffer 810 may be pre-filled with a transport stream until it is half full, or contains $B/2$ packets. At that time, the buffer may begin to be drained at a constant rate of $R_T + \delta$, where $\delta$ is the worst-case drift between the master PCR clock and the CPU clock. Hysteresis control 815 outputs the tracked drain rate to VCXO 820. VCXO generates a clock that controls the data output rate from output scheduler. When the clock is between a first frequency range, a first output rate is produced at the output scheduler. When the clock is between a second frequency range, a second output clock is produced at the output scheduler. Any time the buffer occupancy falls below $B/3$, the drain rate of the output scheduler 825 may be switched to $R_T - \delta$. Any time the buffer occupancy exceeds $2B/3$, the drain rate of the output scheduler 825 may be switched to $R_T + \delta$.

ISO IEC 13818-1, the international standard for "information technology - generic coding of moving pictures and associated audio information: systems," requires that the PCR clock be within $\pm$ 30 ppm. Therefore, the value of $\delta$ may be 30 ppm plus the accuracy of the CPU clock. The value of $B$ may be chosen as a function of the data rate. Since a block of packets does not become ready to transmit until the PCRs around it are received and processed, and since the target PCR interval for DVB compliance is 40 milliseconds, $B$ may be chosen to be one second of bitstream. The number of transport packets in $B$ may be expressed as $\dfrac{1 * R_T}{1504}$.

In the forgoing specification, the invention has been described with reference to specific exemplary embodiments thereof. It will, however, be evident that various modification and changes may be made thereto without departure from the scope of the invention as set forth in the appended claims. The specification and drawings are, accordingly, to be regarded in an illustrative rather than restrictive sense.

**Claims**

1. A device for converting an input variable bit rate transport stream having multiple program clock reference packet identifiers into a constant bit rate transport stream, comprising:

   an input buffer (210) configured to store a plurality of received packets comprising at least two Program Clock References of an input transport stream corresponding to respective at least two received packets;
   a comparator (230) coupled to the input buffer (210) configured to receive said plurality of packets, said comparator configured to determine if a complete Program Clock Reference (PCR) interval has been stored;
   an arithmetic unit (235) coupled to the comparator (230) configured to compute a number of null packets (NP) to insert to an output transport stream after a complete PCR interval has been stored;

a PCR restamper (255) coupled to the arithmetic unit configured to restamp the at least two PCRs; and
an output generator (260) coupled to the PCR restamper (255) to control the output of the output transport stream; wherein

the PCR restamper (255) sets an i+1$^{th}$ output PCR value of a j$^{th}$ packet identifier $PO_{i+1}^{j}$ to be equal to

$$PO_i^j + \frac{1504 * T_i^j}{R_T(1+\alpha_j)} * 27 * 10^6$$ if j is an integer from two to N, wherein $PO_i^j$ is the i$^{th}$ output PCR value of a j$^{th}$ packet identifier, wherein $T_i^j$ is the number of transport stream packets between $PO_i^j$ and $PO_{i+1}^j$,

wherein $PO_1^j$ is set to be equal to the first input PCR value of the j$^{th}$ packet identifier $PI_1^j$, wherein (1+$\alpha_j$):1 is the ratio between a clock for a PCR-bearing PID j and a clock for master PCR.

2. The device of claim 1, wherein the number of NP to be inserted between an i$^{th}$ input PCR and an i+1$^{th}$ input PCR is equal to

$$\left[\frac{R_T(PI_{i+1} - PO_i) - BI}{1504} + 0.5\right]$$

if R$_T$(PI$_{i+1}$-Po$_i$)-BI is greater than zero, wherein R$_T$ is the target bit rate of an output transport stream, wherein PI$_i$ is the i$^{th}$ input PCR value, wherein PI$_{i+1}$ is the i+1$^{th}$ input PCR value, is an i$^{th}$ output PCR value, wherein BI is the number of bits between the i$^{th}$ input PCR and the i+1$^{th}$ input PCR, and wherein is set equal to PI$_i$.

3. The device of claim 2, wherein the number of null packets n$_k$ to be inserted after a packet k, wherein k is an integer from 1 to T, is equal to $\left[\dfrac{k * NP}{T} - \displaystyle\sum_{t=1}^{k-1} n_i\right]$.

4. The device of claim 1, further comprising:

a PCR extractor (225) coupled to the input buffer (210) to extract the at least two PCRs from the transport stream, wherein the input buffer stores the extracted PCRs.

5. The device of claim 1, further comprising:

a counter (220) coupled to the input buffer (210) to provide a respective count for each packet stored to the input buffer, wherein the input buffer stores the respective count.

6. The device of claim 2, wherein the restamper (255) sets an i+1$^{th}$ output PCR value, PO$_{i+1}$, to be equal to

$$PO_i + \frac{BI + 1504 * NP}{R_T} * 27 * 10^6$$

if the transport stream has a single PCR packet identifier.

7. The device of claim 1, wherein the output generator (260) comprises a first in, first out buffer.

8. The device of claim 1, wherein the output generator (260) has a first output rate and a second output rate.

9. The device of claim 8, wherein the output generator comprises:

a buffer (810);

a hysteresis control (815) coupled to the buffer to track occupancy of the buffer;

an output scheduler (825) coupled to the buffer to enable data to be output from the buffer;

a voltage-controlled crystal oscillator (820) coupled to the hysteresis control and the output scheduler to provide a clock to the output scheduler, wherein the clock is a function of the buffer occupancy, wherein the clock has a first frequency that corresponds with the first output rate and a second frequency that corresponds with the second output rate.

10. The device of claim 9, wherein the output generator (260) is initially set to the first output rate, wherein the output generator is switched to the second output rate if the buffer falls below a predetermined occupancy.

11. A method for converting an input variable bit rate transport stream having multiple program clock reference packet identifiers into a constant bit rate transport stream, comprising:

receiving (S310) a variable bit rate transport stream with one or more programs, wherein the transport stream comprises at least one Program Clock Reference (PCR) flow;

storing (S310) a plurality of received packets of the transport stream to an input buffer, said input buffer storing at least two Program Clock References corresponding to respective at least two received packets;

determining by a comparator coupled to said input buffer configured to receive at least two Program Clock References and said plurality of packets from said input buffer that a complete Program Clock Reference interval has been stored;

computing (S320) by an arithmetic unit coupled to said comparator a number of null packets to be inserted to the transport stream;

restamping (S340) PCR values of the PCR clock for each program identifier by setting an i+1$^{th}$ output PCR value of a j$^{th}$ packet identifier $PO_{i+1}^{j}$ to be equal to $PO_{t}^{i} + \dfrac{1504 * T_{i}^{j}}{R_{T}(1+\alpha_{j})} * 27 * 10^{6}$ if j is an integer from two to N, wherein $PO_{i}^{j}$ is the i$^{th}$ output PCR value of a j$^{th}$ packet identifier, wherein $T_{i}^{j}$ is the number of transport stream packets between $PO_{i}^{j}$ and $PO_{i+1}^{j}$, wherein $PO_{1}^{j}$ is set to be equal to the first input PCR value of the j$^{th}$ packet identifier $PI_{t}^{j}$, wherein (1+$\alpha_j$):1 is the ratio between a clock for a PCR-bearing PID j and a clock for master PCR; and

distributing (S330) the null packets to the transport stream.

12. The method of claim 11, further comprising:

choosing a PCR clock in the transport stream as a master PCR clock if the transport stream has more than one PCR packet identifier.

13. The method of claim 12, wherein the master PCR clock is chosen arbitrarily.

14. The method of claim 13, further comprising:

calculating the frequency difference between the PCR clock and the master PCR clock; and

periodically correcting for drift between the PCR clock and the master PCR clock.

15. The method of claim 14, further comprising:

inserting additional PCR packets to maintain PCR spacing of less than 40 milliseconds.

16. The method of claim 15, further comprising:

transmitting the transport stream packet upon the arrival of a new transport stream packet to the buffer.

17. The method of claim 16, further comprising:

filling the buffer until the buffer is at least half full;
draining the buffer at an initial first constant bit rate;
draining the buffer at a second constant bit rate if the buffer occupancy is less than one-third full; and
switching the draining of the buffer from the second constant bit rate to the first constant bit rate if the buffer is greater than two-thirds full.

**Patentansprüche**

1. Vorrichtung zum Umwandeln eines Eingangstransportstroms mit variabler Bitrate, der mehrere Programmtaktreferenz-Paketkennungen aufweist, in einen Transportstrom mit konstanter Bitrate, umfassend:

einen Eingangspuffer (210), der so konfiguriert ist, dass er eine Mehrzahl von empfangenen Paketen speichert, die mindestens zwei Programmtaktreferenzen eines Eingangstransportstroms umfassen, welche jeweiligen mindestens zwei empfangenen Paketen entsprechen;
einen Komparator (230), der mit dem Eingangspuffer (210) gekoppelt und so konfiguriert ist, dass er die Mehrzahl von Paketen empfängt, wobei der Komparator so konfiguriert ist, dass er bestimmt, ob ein vollständiges Programmtaktreferenz (PCR)-Intervall gespeichert wurde;
eine Arithmetik-Einheit (235), die mit dem Komparator (230) gekoppelt und so konfiguriert ist, dass sie eine Anzahl von ungültigen Paketen (NP) zum Einfügen in einen Ausgangstransportstrom berechnet, nachdem ein vollständiges PCR-Intervall gespeichert wurde;
einen PCR-Restamper (255), der mit der Arithmetik-Einheit gekoppelt und so konfiguriert ist, dass er die mindestens zwei PCRs neu stempelt; und
einen Ausgabegenerator (260), der mit dem PCR-Restamper (255) gekoppelt ist, zum Steuern der Ausgabe des Ausgangstransportstroms; wobei

der PCR-Restamper (255) einen i+1-ten Ausgangs-PCR-Wert einer j-ten Paketkennung $PO_{i+1}^j$ so festlegt, dass er gleich $PO_i^j + \dfrac{1504 * T_i^j}{R_T(1+\alpha_j)} * 27 * 10^6$ ist, wenn j eine ganze Zahl von zwei bis N ist, wobei $PO_i^j$ der i-te Ausgangs-PCR-Wert einer j-ten Paketkennung ist, wobei $T_i^j$ die Anzahl von Transportstrompaketen zwischen $PO_i^j$ und $PO_{i+1}^j$ ist, wobei $PO_i^j$ so festgelegt wird, dass er gleich dem ersten Eingangs-PCR-Wert der j-ten Paketkennung ist, wobei (1 + αj):1 das Verhältnis zwischen einem Takt für eine PCR-tragende PID j und einem Takt für Master-PCR ist.

2. Vorrichtung nach Anspruch 1, wobei die Anzahl von NPs, die zwischen einer i-ten Eingangs-PCR und einer i+1-ten Eingangs-PCR gleich

$$\left[ \frac{R_T(PI_{i+1} - PO_i) - BI}{1504} + 0.5 \right]$$

ist, wenn $R_T(PI_{i+1} - PO_i)$ - BI größer als null ist, wobei $R_T$ die Zielbitrate des Ausgangstransportstroms ist, wobei $PI_i$ der i-te Eingangs-PCR-Wert ist, wobei $PI_{i+1}$ der i+1-te Eingangs-PCR-Wert ist, ein i-ter Ausgangs-PCR-Wert ist, wobei BI die Anzahl von Bits zwischen der i-ten Eingangs-PCR und der i+1-ten Eingangs-PCR ist, und wobei so festgelegt wird, dass er gleich $PI_i$ ist.

3. Vorrichtung nach Anspruch 2, wobei die Anzahl von ungültigen Paketen nk, die nach einem Paket k eingefügt werden sollen, wobei k eine ganze Zahl von 1 bis T ist, gleich $\left[ \dfrac{k * NP}{T} - \sum_{i=1}^{k-1} n_i \right]$ ist.

4. Vorrichtung nach Anspruch 1, ferner umfassend:

   einen PCR-Extraktor (225) der mit dem Eingangspuffer (210) gekoppelt ist, zum Extrahieren der mindestens zwei PCRs aus dem Transportstrom, wobei der Eingangspuffer die extrahierten PCRs speichert.

5. Vorrichtung nach Anspruch 1, ferner umfassend:

   einen Zähler (220), der mit dem Eingangspuffer (210) gekoppelt ist, zum Bereitstellen einer jeweiligen Zählung für jedes im Eingangspuffer gespeicherte Paket, wobei der Eingangspuffer die jeweilige Zählung speichert.

6. Vorrichtung nach Anspruch 2, wobei der Restamper (255) einen i+1-ten Ausgangs-PCR-Wert, $PO_{i+1}$, so festlegt, dass er gleich

$$PO_i + \frac{BI + 1504 * NP}{R_T} * 27 * 10^6$$

ist, wenn der Transportstrom eine einzige PCR-Paketkennung aufweist.

7. Vorrichtung nach Anspruch 1, wobei der Ausgabegenerator (260) einen Zuerst-rein-zuerst-raus-Puffer umfasst.

8. Vorrichtung nach Anspruch 1, wobei der Ausgabegenerator (260) eine erste Ausgaberate und eine zweite Ausgaberate aufweist.

9. Vorrichtung nach Anspruch 8, wobei die Ausgabegenerator umfasst:

   einen Puffer (810);
   eine Hysterese-Steuerung (815), die mit dem Puffer gekoppelt ist, zum Verfolgen des Füllstands des Puffers;
   einen Ausgabe-Scheduler (825), der mit dem Puffer gekoppelt ist, zum Ermöglichen des Ausgebens von Daten aus dem Puffer;
   einen spannungsgesteuerten Quarzoszillator (820), der mit der Hysterese-Steuerung und dem Ausgabe-Scheduler gekoppelt ist, zum Bereitstellen eines Takts für den Ausgabe-Scheduler, wobei der Takt eine Funktion des Pufferfüllstands ist, wobei der Takt eine erste Frequenz, die der ersten Ausgaberate entspricht, und eine zweite Frequenz aufweist, die der zweiten Ausgaberate entspricht.

10. Vorrichtung nach Anspruch 9, wobei der Ausgabegenerator (260) anfänglich auf die erste Ausgaberate gesetzt ist, wobei der Ausgabegenerator auf die zweite Ausgaberate geschaltet wird, wenn der Puffer unter einen vorbestimmten Füllstand fällt.

11. Verfahren zur Umwandlung eines Eingangstransportstroms mit variabler Bitrate, der mehrere Programmtaktreferenz-Paketkennungen aufweist, in einen Transportstrom mit konstanter Bitrate, umfassend:

   Empfangen (S310) eines Transportstroms mit variabler Bitrate mit einem oder mehreren Programmen, wobei der Transportstrom mindestens einen Programmtaktreferenz (PCR)-Fluss umfasst;
   Speichern (S310) einer Mehrzahl von empfangenen Paketen des Transportstroms in einem Eingangspuffer, wobei der Eingangspuffer mindestens zwei Programmtaktreferenzen speichert, welche jeweiligen mindestens zwei empfangenen Paketen entsprechen;
   Bestimmen durch einen Komparator, der mit dem Eingangspuffer gekoppelt und so konfiguriert ist, dass er mindestens zwei Programmtaktreferenzen und die Mehrzahl von Paketen vom Eingangspuffer empfängt, dass ein vollständiges Programmtaktreferenzintervall gespeichert wurde;
   Berechnen (S320) durch eine Arithmetik-Einheit, die mit dem Komparator gekoppelt ist, einer Anzahl von ungültigen Paketen, die in den Transportstrom eingefügt werden sollen;

   Neustempeln (S340) von PCR-Werten des PCR-Takts für jede Programmkennung durch derartiges Festlegen eines i+1-ten Ausgangs-PCR-Werts einer j-ten Paketkennung $PO_{i+1}^j$, dass er gleich

$$PO_i^j + \frac{1504 * T_i^j}{R_T(1+\alpha_j)} * 27 * 10^6$$ ist, wenn j eine ganze Zahl von zwei bis N ist, wobei $PO_i^j$ der i-te Ausgangs-PCR-Wert einer j-ten Paketkennung ist, wobei $T_i^j$ die Anzahl von Transportstrompaketen zwischen $PO_i^j$

und $PO_{i+1}^j$ ist, wobei $PO_i^j$ so festgelegt wird, dass er gleich dem ersten Eingangs-PCR-Wert der j-ten Paket-

kennung $PI_i^j$ ist, wobei $(1 + \alpha j):1$ das Verhältnis zwischen einem Takt für eine PCR-tragende PID j und einem Takt für Master-PCR ist; und
Verteilen (S330) der ungültigen Pakete an den Transportstrom.

**12.** Verfahren nach Anspruch 11, ferner umfassend:

Wählen eines PCR-Takts im Transportstrom als einen Master-PCR-Takt, wenn der Transportstrom mehr als eine PCR-Paketkennung aufweist.

**13.** Verfahren nach Anspruch 12, wobei der Master-PCR-Takt willkürlich gewählt wird.

**14.** Verfahren nach Anspruch 13, ferner umfassend:

Berechnen der Frequenzdifferenz zwischen dem PCR-Takt und dem Master-PCR-Takt; und
periodisches Korrigieren von Drift zwischen dem PCR-Takt und dem Master-PCR-Takt.

**15.** Verfahren nach Anspruch 14, ferner umfassend:

Einfügen von zusätzlichen PCR-Paketen, um einen PCR-Abstand von weniger als 40 Millisekunden aufrechtzuerhalten.

**16.** Verfahren nach Anspruch 15, ferner umfassend:

Senden des Transportstrompakets bei Ankunft eines neuen Transportstrompakets zum Puffer.

**17.** Verfahren nach Anspruch 16, ferner umfassend:

Füllen des Puffers, bis der Puffer mindestens halbvoll ist;
Entleeren des Puffers bei einer anfänglichen ersten konstanten Bitrate;
Entleeren des Puffers bei einer zweiten konstanten Bitrate, wenn der Pufferfüllstand weniger als zu einem Drittel voll ist; und
Wechseln des Entleerens des Puffers von der zweiten konstanten Bitrate zur ersten konstanten Bitrate, wenn der Puffer zu mehr als zwei Dritteln voll ist.

**Revendications**

**1.** Dispositif pour convertir un flux de transport à débit binaire variable d'entrée comportant de multiples identifiants de paquet de référence d'horloge de programme en un flux de transport à débit binaire constant, comprenant :

une mémoire tampon d'entrée (210) configurée pour mémoriser une pluralité de paquets reçus comprenant au moins deux références d'horloge de programme d'un flux de transport d'entrée correspondant à au moins deux paquets reçus respectifs ;
un comparateur (230) couplé à la mémoire tampon d'entrée (210) configuré pour recevoir ladite pluralité de paquets, ledit comparateur étant configuré pour déterminer si un intervalle de référence d'horloge de programme (PCR) complet a été mémorisé ;
une unité arithmétique (235) couplée au comparateur (230) configurée pour calculer un nombre de paquets nuls (NP) à insérer dans un flux de transport de sortie après qu'un intervalle de PCR complet a été mémorisé ;
un dispositif de réécriture d'horodatage de PCR (255) couplé à l'unité arithmétique configuré pour réécrire l'horodatage desdites au moins deux PCR ; et

un générateur de sortie (260) couplé au dispositif de réécriture d'horodatage de PCR (255) pour commander la sortie du flux de transport de sortie ;

le dispositif de réécriture d'horodatage de PCR (255) mettant une i+1<sup>ème</sup> valeur de PCR de sortie d'un j<sup>ème</sup> identifiant de paquet $PO_{i+1}^{j}$ à une valeur égale à $PO_{i}^{j} + \dfrac{1504 * T_{i}^{j}}{R_{T}(1+\alpha_{j})} * 27 * 10^{6}$ si j est un entier de deux à N, où $PO_{i}^{j}$ est la i<sup>ème</sup> valeur de PCR de sortie du j<sup>ème</sup> identifiant de paquet, où $T_{i}^{j}$ est le nombre de paquets de flux de transport entre $PO_{i}^{j}$ et $PO_{i+1}^{j}$, où $PO_{i}^{j}$ est fixé de manière à être égal à la première valeur de PCR d'entrée du j<sup>ème</sup> identifiant de paquet $PI_{1}^{j}$, où $(1+\alpha_{j})$:1 est le rapport entre une horloge pour un PID de support de PCR j et une horloge pour une PCR maître.

2. Dispositif selon la revendication 1, dans lequel le nombre de NP à insérer entre une i<sup>ème</sup> PCR d'entrée et une i+1<sup>ème</sup> PCR d'entrée est égal à

$$R_{T}(PI_{i+1} - PO_{i}) - BI \qquad \left[\dfrac{R_{T}(\overline{PI}_{i+1} - PO_{i}) - BI}{1504} + 0,5\right]$$

si $R_{T}(PI_{i+1}-PO_{i})-BI$ est supérieur à zéro, où $R_{T}$ est le débit binaire cible d'un flux de transport de sortie, où $PI_{i}$ est la i<sup>ème</sup> valeur de PCR d'entrée, où $PI_{i+1}$ est la i+1<sup>ème</sup> valeur de PCR d'entrée, est une i<sup>ème</sup> valeur de PCR de sortie, où BI est le nombre de bits entre la i<sup>ème</sup> PCR d'entrée et la i+1<sup>ème</sup> PCR d'entrée, et où est fixée pour être égale à $PI_{i}$.

3. Dispositif selon la revendication 2, dans lequel le nombre de paquets nuls $n_{k}$ à insérer après un paquet k, où k est un entier de 1 à T, est égal à $\left[\dfrac{k * NP}{T} - \sum_{i=1}^{k-1} n_{i}\right]$.

4. Dispositif selon la revendication 1, comprenant en outre :

un extracteur de PCR (225) couplé à la mémoire tampon d'entrée (210) pour extraire lesdites au moins deux PCR du flux de transport, la mémoire tampon d'entrée mémorisant les PCR extraites.

5. Dispositif selon la revendication 1, comprenant en outre :

un compteur (220) couplé à la mémoire tampon d'entrée (210) pour fournir un compte respectif pour chaque paquet mémorisé dans la mémoire tampon d'entrée, la mémoire tampon d'entrée mémorisant le compte respectif.

6. Dispositif selon la revendication 2, dans lequel le dispositif de réécriture d'horodatage (255) fixe une i+1<sup>ème</sup> valeur de PCR de sortie, $PO_{i+1}$, pour qu'elle soit égale à

$$PO_{i} + \dfrac{BI + 1504 * NP}{R_{T}} * 27 * 10^{6}$$

si le flux de transport comporte un identifiant de paquet de PCR unique.

7. Dispositif selon la revendication 1, dans lequel le générateur de sortie (260) comprend une mémoire tampon premier entré - premier sorti.

8. Dispositif selon la revendication 1, dans lequel le générateur de sortie (260) a un premier débit de sortie et un deuxième débit de sortie.

**9.** Dispositif selon la revendication 8, dans lequel le générateur de sortie comprend :

une mémoire tampon (810) ;
une commande à hystérésis (815) couplée à la mémoire tampon pour suivre l'occupation de la mémoire tampon ;
un planificateur de sortie (825) couplé à la mémoire tampon pour permettre que les données soient sorties de la mémoire tampon ;
un oscillateur à quartz commandé par tension (820) couplé à la commande à hystérésis et au planificateur de sortie pour fournir une horloge au planificateur de sortie, dans lequel l'horloge est fonction de l'occupation de la mémoire tampon, dans lequel l'horloge a une première fréquence qui correspond au premier débit de sortie et une deuxième fréquence qui correspond au deuxième débit de sortie.

**10.** Dispositif selon la revendication 9, dans lequel le générateur de sortie (260) est au départ initialisé au premier débit de sortie, dans lequel le générateur de sortie est commuté vers le deuxième débit de sortie si l'occupation de la mémoire tampon tombe au-dessous d'une occupation prédéterminée.

**11.** Procédé pour convertir un flux de transport à débit binaire variable d'entrée comportant de multiples identifiants de paquet de référence d'horloge de programme en un flux de transport à débit binaire constant, comprenant :

la réception (S310) d'un flux de transport à débit binaire variable avec un ou plusieurs programmes, le flux de transport comprenant au moins un flux de référence d'horloge de programme (PCR) ;
la mémorisation (S310) d'une pluralité de paquets reçus du flux de transport dans une mémoire tampon d'entrée, ladite mémoire tampon d'entrée mémorisant au moins deux références d'horloge de programme correspondant à au moins deux paquets reçus respectifs ;
la détermination, par un comparateur couplé à ladite mémoire tampon d'entrée configuré pour recevoir au moins deux références d'horloge de programme et ladite pluralité de paquets de ladite mémoire tampon d'entrée, qu'un intervalle de référence d'horloge de programme complet a été mémorisé ;
le calcul (S320), par une unité arithmétique couplée audit comparateur, d'un nombre de paquets nuls à insérer dans le flux de transport ;
la réécriture de l'horodatage (S340) des valeurs de PCR de l'horloge de PCR pour chaque identifiant de programme en mettant une i+1$^{\text{ème}}$ valeur de PCR de sortie d'un j$^{\text{ème}}$ identifiant de paquet $PO_{i+1}^{j}$ à une valeur égale à $PO_i^j + \dfrac{1504 * T_i^j}{R_T(1+\alpha_j)} * 27 * 10^6$ si j est un entier de deux à N, où $PO_i^j$ est la i$^{\text{ème}}$ valeur de PCR de sortie d'un j$^{\text{ème}}$ identifiant de paquet, où $T_i^j$ est le nombre de paquets de flux de transport entre $PO_i^j$ et

$PO_{i+1}^j$, où $PO_i^j$ est fixé de manière à être égal à la première valeur de PCR d'entrée du j$^{\text{ème}}$ identifiant de

paquet $PI_i^j$, où (1+$\alpha_j$):1 est le rapport entre une horloge pour un PID de support de PCR et une horloge pour une PCR maître ; et
la répartition (S330) des paquets nuls dans le flux de transport.

**12.** Procédé selon la revendication 11, comprenant en outre :

le choix d'une horloge de PCR dans le flux de transport en tant qu'horloge de PCR maître si le flux de transport comporte plus d'un identifiant de paquet de PCR.

**13.** Procédé selon la revendication 12, dans lequel l'horloge de PCR maître est choisie arbitrairement.

**14.** Procédé selon la revendication 13, comprenant en outre :

le calcul de la différence de fréquence entre l'horloge de PCR et l'horloge de PCR maître ; et
la correction périodique d'une dérive entre l'horloge de PCR et l'horloge de PCR maître.

**15.** Procédé selon la revendication 14, comprenant en outre :

l'insertion de paquets de PCR supplémentaires pour maintenir un espacement de PCR inférieur à 40 millisecondes.

**16.** Procédé selon la revendication 15, comprenant en outre :

la transmission du paquet de flux de transport lors de l'arrivée d'un nouveau paquet de flux de transport dans la mémoire tampon.

**17.** Procédé selon la revendication 16, comprenant en outre :

le remplissage de la mémoire tampon jusqu'à ce que la mémoire tampon soit au moins à moitié pleine ;
le vidage de la mémoire tampon à un premier débit binaire constant initial ;
le vidage de la mémoire tampon à un deuxième débit binaire constant si l'occupation de la mémoire tampon est inférieure à un tiers ; et
la commutation du vidage de la mémoire tampon du deuxième débit binaire constant vers le premier débit binaire constant si l'occupation de la mémoire tampon est supérieure à deux tiers.

FIG. 1A

EP 2 311 260 B1

FIG. 1B

EP 2 311 260 B1

FIG. 1C

EP 2 311 260 B1

FIG. 2

BUFFER TRANSPORT STREAM
PACKETS
310

COMPUTE NULL PACKETS
320

DISTRIBUTE NULL PACKETS AMONG
THE BUFFERED PACKETS
330

RESTAMP PCR VALUES
340

FIG. 3

CHOOSE A PCR AS
THE MASTER PCR
410

COMPUTE THE NUMBER OF NULL
PACKETS
420

DISTRIBUTE NULL PACKETS
430

RESTAMP PCR VALUES FOR EACH
PID BASED ON THEIR ACTUAL
FREQUENCY
440

CALCULATE THE FREQUENCY
DIFFERENCE BETWEEN EACH PCR
AND THE MASTER CLOCK
450

FIG. 4

```
┌──────────────────────────────────┐
│  ALLOCATE TIME FOR ESTIMATING    │
│      CORRECTION FACTOR, α         │
│              510                  │
└──────────────────────────────────┘
              │
              ▼
┌──────────────────────────────────┐
│  COLLECT DATA AT TARGET BIT RATE │
│  FOR THE ALLOCATED TIME PERIOD   │
│              520                  │
└──────────────────────────────────┘
              │
              ▼
┌──────────────────────────────────┐
│     COMPUTE PCR OFFSET AND       │
│        FREQUENCY DRIFT            │
│              530                  │
└──────────────────────────────────┘
              │
              ▼
┌──────────────────────────────────┐
│   UPDATE CORRECTION FACTOR, α     │
│              540                  │
└──────────────────────────────────┘
```

## FIG. 5

CALCULATE PCR DIFFERENCE
610

CALCULATE TIMING MARGIN AT
EVERY NULL PACKET
INSERTION TIME
620

IS
MAXIMUM
TIMING MARGIN GREATER
THAN 38 MILLISECONDS?
630

END
650

NO

YES

REPLACE NULL PACKET WITH
PCR-ONLY PACKET USING
THE CALCULATED VALUE
640

FIG. 6

SEGMENT BEING
BUFFERED
710

SEGMENT READY TO GO
720

SEGMENT BEING TRANSMITTED
730

INPUT
PACKETS →

| | | | P C R | | | N U L L | | | N U L L | P C R | | | N U L L | | | N U L L | |

BUFFER
700

260

FIG. 7

EP 2 311 260 B1

**FIG. 8**

EP 2 311 260 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1821542 A2
- WO 0225952 A2